# EUROPEAN PATENT APPLICATION

(11) **EP 4 391 601 A1**
(43) Date of publication of application: **26.06.2024**
(21) Application number: 22216165.5
(22) Date of filing: 22.12.2022
(51) Int. Cl.: H04W 4/38

(54) **SENSOR DEVICE WITH SYNCHRONIZED MEASUREMENT CAPABILITY**

(71) Applicant: Kamstrup A/S, 8660 Skanderborg (DK)
(72) Inventor: Poulsen, Jonas Drammestrup, 8660 Skanderborg (DK); Habbassy, Shekib, 8660 Skanderborg (DK)
(74) Representative: Plougmann Vingtoft a/s

(57) **Abstract**

A sensor device, such as a consumption meter, with an LTE modem, a processor system connected with the LTE modem, and a sensor system comprising at least one sensor configured to sense a physical parameter and to generate an output accordingly to the processor system. The sensor device is configured to receive an activation time via the LTE network, wherein the activation time includes an absolute time and/or an indication of a specific LTE frame number. The processor system is configured to synchronize timing to a current LTE frame number in cooperation with the LTE modem. This may especially be done by the processor system signaling on an electric pin to the LTE modem which in response outputs a current LTE frame number, and along with the signaling on the electric pin, the processor system starts a timer. Thus, with the timer started at a known LTE frame number, the sensor device can calculate precisely to initiate a predetermined action time synchronized with the absolute time indicated in the received activation time along with a specific LTE frame number. The action may involve performing a measurement with a sensor in the sensor device time synchronized with the received activation time. This provides high precision time synchronization of a group of sensor devices, thus allowing performing measurements simultaneously by the group of senor devices. This allows group measurements which are not possible with the time precision of internal clocks of a group of sensor devices, and this time synchronization can be important for some applications, such as acoustic leak detection in a utility network.

## Description

### FIELD OF THE INVENTION

The present invention relates to sensor devices, such as consumption meters, with capability for performing time synchronized actions activated via a wireless communication network. More specifically, the invention relates to synchronization of sensor devices via an LTE network.

### BACKGROUND OF THE INVENTION

In a utility network, whether being a water, gas, heating, cooling or electricity network, a number of consumption meters are distributed to measure a consumed amount of the utility at each consumer site. Often, such consumption meters are battery powered and being configured to enter a sleep mode of operation to save battery power. Such consumption meters may have sensor capabilities for sensing one or more physical property in addition to the dedicated sensor for the utility meter function.

In some application, for example detection of a leak in the utility network, it may be interesting to collect measurement data from sensors in a group of consumption meters distributed in the utility network. For specific types of such measurement data, a precise time synchronization of measurements for a group of consumption meters is important. However, even though the consumption meters typically have a built-in clock which can provide an absolute time, such clock is typically imprecise, i.e. having deviations up to more than one minute. Therefore, this clock can not be used for precisely time synchronized measurements in a group of consumption meters.

### OBJECT OF THE INVENTION

It is an object of the present invention to wholly or partly overcome disadvantages and drawbacks of the prior art. More specifically, it is an object to provide a sensor device, e.g. a consumption meter, which is suited for performing synchronous, e.g. simultaneous, measurements in a group of distributed devices.

### SUMMARY OF THE INVENTION

In a first aspect, the invention provides a sensor device comprising
- an LTE modem configured to receive and transmit wireless signals on an LTE network,
- a processor system connected with an interface to the LTE modem, wherein the processing system comprises a clock configured to provide an absolute time output, and wherein the processor system further comprises a timer, and
- a sensor system comprising at least one sensor configured to sense a physical parameter and to generate an output accordingly to the processor system,
characterized in that the sensor device is configured:
- to receive a wireless signal on the LTE network comprising data indicative of an activation time comprising at least data indicative of an absolute time or a relative time,
- to time synchronize to a current LTE frame number in cooperation with the LTE modem, and
- to initiate a predetermined action involving the sensor system, such as initiating a measurement or reading an output from the sensor system, synchronized with the absolute time or relative time, and synchronized with a specific LTE frame number, wherein the specific LTE frame number is received in the data indicative of the activation time or stored in the sensor device.

Such sensor device, e.g. a consumption meter, is advantageous, since an LTE network provides a well defined frame structure with consecutively numbered frames (hyper frames, frames and sub frames) which are synchronized precisely, and this continues in repeated cycles. The inventors have realized, that utilizing the fact that an LTE modem has information about an current LTE frame number, and possibly also a time lapsed of the current LTE sub frame, thereby allowing sensor devices to synchronize internally to a very precise time, thereby allowing a time precision in the order of less than one second, e.g. with a precision down to such as 1-10 ms, or even better than 1 ms, or even better than 10 µs. Thereby, a group of sensor devices can perform an activity in time synchronization with a time precision which by far exceeds the time precision provided by their internal clocks.

This allows performing of measurements using the sensor system in a group of meters synchronously, thereby allowing new applications which require synchronized measurements, e.g. measurement of electric phase at various locations simultaneously in an electricity network. However, such high precision time synchronization allows various measurements e.g. to locate a time specific event in a utility network or a time specific event not related to a utility network.

The high precision time synchronization can provide meaningful sensing or measuring of various physical properties which are impossible with the time precision provided by individual nonsynchronized clocks.

The sensor device may be a consumption meter which has one or more sensors dedicated to measurements not directly related to metering of the utility. Some consumption meter have LTE modems and can thus be modified to function according to the invention. However, the sensor device may be a dedicated sensor device, e.g. for acoustic leak detection of a fluid network, such as a water network.

The high time synchronization precision which is possible by the present invention allows simultaneous measurements of electric parameters which can be implemented e.g. in an electricity meter.

The sensor device can be controlled to perform synchronized, e.g. simultaneous measurements from a back-end system. A user, e.g. a utility provider, can decide to perform a measurement using one or more sensors in a group of sensor devices by transmitting a message over the LTE network to the group of sensor devices ahead of a specific time where the measurement is intended to be activated. Especially, if the sensor device can enter a sleep mode of operation, it may be preferred to transmit the intended activation time to the sensor device just after the sensor device is awake, e.g. just after the sensor device has transmitted measure data via the LTE network, e.g. consumption data which may be transmitted once or several times a day. In this way, it is possible to allow the sensor device to be in a sleep mode until minutes or even only seconds before the intended synchronized measurement is to be performed.

By 'LTE network' is understood a cellular communication compatible network, e.g. referred to as a 3GPP (3rd Generation Partnership Project) Long Term Evolution wireless network. Such LTE network is based on a frame structure with numbered LTE frames in time synchronization. LTE frame numbers repeat themselves within a few hour.

In the following, preferred features and embodiments will be described.

In some embodiments, the processor system may be configured to initiate the predetermined action synchronized with a specific LTE frame number. Especially, the processor system may be configured to initiate the predetermined action synchronized with a specific LTE frame number received in the data indicative of the activation time, or a specific LTE frame number stored in the sensor device. In some embodiments, an action may be preprogrammed in the sensor device, or an action may be defined in a wireless signal received on the LTE network.

Preferably, the processor system is configured to receive from the LTE modem both the current LTE frame number and a value indicating a time lapsed (in µs) of the current LTE sub frame, in response to the signaling on the electric pin on the LTE modem. This allows a time synchronization with a precision better than 1 ms, since an LTE sub frame has a time extension of 1 ms.

In preferred embodiments, the processor system is configured to signal on an electric pin of the LTE modem, and to receive data indicative of a current LTE frame number in response. In this way, it is utilized that the LTE modem is always informed about the LTE frame number, and in a version of the LTE modem with an interface supporting this functionality, the processor system can, on request, receive the current LTE frame number from the LTE modem via its interface with the modem. In this way, it is possible to time synchronize to the precise LTE frame number. Especially, the processor system may pull-up, or pull down the electric pin of the LTE modem. Specifically, the electric pin may be a GPIO pin of the LTE modem.

Especially, the processor system may be configured to start the timer in a synchronized manner along with the signaling on the electric pin of the LTE modem. With a known current LTE frame number, the timer can be used to time when to initiated the predetermined action, since it is possible to determine the time from the current LTE frame number until the specific LTE frame number.

Especially, the processor system may be configured to calculate at which timer state to initiate said predetermined action based on the specific LTE frame number and the data indicative of the current LTE frame number received from the LTE modem. In this way a high precision can be obtained, even though the timer may not provide a super high precision, since the timer will only be used to time activation for a limited time period, such from minutes up to a couple of hours or so.

The wireless signal received on the LTE network may comprise data indicative of both of: the specific LTE frame number, and a specific absolute time. In this way, it is possible to transmit the wireless signal even days ahead of the intended time for activation. Especially, the wireless signal may comprise data indicative of a specific absolute future time, such as a specific absolute future time including data indicative of a future day and a time of the future day. Hereby, the sensor device can use its clock to stay in a sleep mode of operation until minutes or even only seconds before activation.

The processor system may be configured to utilize the clock to determine which day and approximate time on the day to initiate said predetermined action.

The sensor device may be configured to enter a sleep mode of operation and to enter a normal mode of operation in response to an absolute time output from the clock reaching a
predetermined time, and wherein the processor system is configured to determine a time to enter the normal mode of operation prior to a time defined by the activation time. In this way, the rather imprecise clock in the sensor device is used to wake up the sensor device, so as to allow the sensor device to be prepared for activation of the action. E.g. the sensor device may be programmed to wake up 1-10 minutes prior to the time defined by the specific absolute time the specific LTE frame number, such as a time within 1-60 seconds prior to a time defined by the specific absolute time the specific LTE frame number. Still, the sensor device can save battery, if battery powered, by maintaining sleep mode of operation until just before the intended activation. Especially, it can be ensured that the LTE modem can stay in sleep mode most of the time and thus save battery power.

The processor system may be configured to read a current LTE frame number from the LTE modem by signaling on an electric pin of (e.g. a GPIO pin) of the LTE modem, and wherein the processor system is further configured to calculate a time and to wait until a current LTE frame number equals a predetermined LTE frame number. For this, the timer of the processor device may be used, and still a synchronization can be obtained.

In a special embodiment, the processor system may be configured to program the LTE modem to indicate on an electric pin (e.g. a GPIO pin) when a current LTE frame number equals a predetermined LTE frame number, wherein the predetermined LTE frame number is determined in response to the received activation time comprising data indicative of a specific LTE frame number.

The predetermined action may involve initiating at least one measurement of a physical parameter using the at least one sensor of the sensor system, and wherein the sensor device is configured to transmit data indicative of at least one measured value in a wireless signal on the LTE network. Especially, the at least one sensor may be arranged to measure at least one of: a fluid flow rate, a temperature, a fluid pressure, a magnetic field strength, an electric impedance, an electric voltage or current, a turbidity measure, and an acoustic signal.

The processor system may be configured to receive data indicative of which type of action to initiate in a wireless signal on the LTE network. This can be done by transmitting a code, wherein the processor system is configured to read the code and to translate the code into a specific action.

The sensor device may especially be a consumption meter, such as a water meter, a gas meter, a heat meter, a cooling meter, or an electricity meter, configured to measure a consumed amount of a utility and to transmit a wireless signal on the LTE network comprising data indicative of the measured consumed amount accordingly. Specifically, the sensor device is a consumption meter being one of: a water meter, a gas meter, a heat meter, and a cooling meter, and wherein the consumption meter comprises at least one ultrasonic transducer for measuring a flow rate of a fluid. More specifically, the sensor device may comprise a flow tube with a flow passage of the fluid between an inlet and an outlet, a flow meter housing associated with the flow tube, and a meter system comprising a meter circuit connected to a transducer and being configured to measure consumed amount of the utility.

In some embodiments, the sensor device may be configured to transmit a first wireless signal on the LTE network comprising data indicative of both of: 1) a current LTE frame number determined by the LTE modem, and 2) an associated absolute time output from the clock. This may be utilized by the back-end receiver to transmit a return signal to the sensor device to allow the sensor device to adjust its clock. Especially, the sensor device may be configured to receive a second wireless signal on the LTE network in response to the first wireless signal, wherein the second wireless signal comprises clock adjustment data, and wherein the sensor device is configured to adjust the clock accordingly.

The sensor device may especially be powered by a battery, such as an internal battery. The proposed way of time synchronizing can be implemented so that it is only required that the LTE modem is in normal mode of operation in a very limited time period. This helps to save battery power.

The LTE modem may especially be configured to operate in at least one carrier frequency band selected from: 450 MHz, 700 MHz, 800 MHz, 1700 MHz, 1800 MHz, 1900 MHz, 2100 MHz, and 2600 MHz. The LTE modem may be configured to operate at a carrier frequency in other frequency ranges, if preferred.

In a second aspect, the invention provides a system comprising
- a plurality of sensor devices according to the first aspect, and
- a transmitter system configured to transmit a wireless signal on the LTE network comprising data indicative of an activation time to the plurality of sensor devices.

Especially, the data indicative of an activation time may comprise data indicative of a specific LTE frame number and an absolute time, such as all of: a specific LTE frame number and an absolute time comprising indication of at least a day and a time.

The transmitter system can be implemented as a back-end system of a utility meter reading system, and wherein the sensor devices are consumption meters. The consumption meters may especially comprise one or more sensors dedicated to an additional functionality in addition to sensor(s) operating to provide the metering function.

The transmitter system may especially allow a user to select an activation time which is then transmitted to the sensor device.

The transmitter system may further comprise a receiver system configured to receive data from each of the plurality of sensor devices via the LTE network. Especially, said data may comprise data indicative of at least one measured value performed by the individual sensor device at the time defined by the activation.

In a third aspect, the invention provides a method for time synchronizing a plurality of sensor devices, such as a consumption meters, the method comprising
- transmitting a wireless signals on an LTE network comprising data indicative of an activation time,
- receiving the wireless signals on the LTE network by a plurality of sensor devices,
- synchronizing, by each of the sensor devices, timing to a current LTE frame number in cooperation with an LTE modem in the sensor device, and
- initiating, by each of the sensor devices, a predetermined action, such as performing a measurement involving reading an output from a sensor system, synchronized with the activation time.

Especially, the activation time may comprise data indicative of a specific LTE frame number and an absolute time.

The step of synchronizing timing to a current LTE frame number in cooperation with an LTE modem in the sensor device may comprise a processor system in the sensor device signaling on an electric pin to the LTE modem in the sensor device. In response, the LTE modem transmits a current LTE frame number. The processor system may especially start a timer along with signaling on the electric pin to the LTE modem, thereby allowing the sensor device to synchronize time with a precision of at least an LTE frame number length. In another implementation, the timer is a running timer, and thus simultaneous with signaling on the electric pin, the timer register is read, and the timer state is calculated based on the read registered time. Especially, the predetermined action may be initiated with LTE frame number precision, in case the activation time received includes a specific LTE frame number to synchronize initiating of the action to.

The method may comprise receiving data indicative of an LTE frame number from at least one of the sensor devices, preferably receiving data indicative of both of: 1) the LTE frame number and 2) an absolute time associated with the LTE frame number. This is preferably done, so as to allow a back-end system to estimate timing between LTE frame number and absolute time in a sensor device. Further, this is preferably utilize to generate data indicative of an activation time based on the received data. Thereby, a future specific LTE frame number can be unambiguously selected where all sensor devices can perform a synchronous action. Hereby, it can be avoided that a future LTE frame number is selected which overlaps with a specified activation time, depending on the precision of the internal clocks of the sensor devices. Further, if a specific LTE frame number as activation time, and this LTE frame number has already passed at the sensor device, this means that the internal timer in the sensor device needs to wait until this specific LTE frame number occurs again, i.e. await one LTE Hyper Frame sequence, which is almost 3 hours.

Based on received absolute time and LTE frame number from at least one sensor device, an activation time can be calculated, such as an activation time at east 24 hours in the future. The activation time includes an absolute time and a specific LTE frame number which is determined to occur within a short time period of the absolute time, such as within 60 seconds or 120 seconds or 300 seconds of the of the absolute time. The advantage of this is that the sensor devices only need to power up the modem (go to normal operation from sleep mode) once every 24 hours, within the following 24 hours the absolute time and specific LTE frame is transmitted to all sensor devices which are thereby synchronized.

Furthermore, the method may comprise transmitting time adjustment data to one or more individual sensor devices in response to a received LTE frame number and associated absolute time. This can be used to adjust the internal clock in the sensor devices.

The predetermined action may comprise performing a measurement synchronized to the activation time, e.g. a specific LTE frame number, by each of the sensor devices. The method may further comprise transmitting wireless signals, by each of the sensor devices, wherein said wireless signals comprise data indicative of at least one measured value performed by the individual sensor device at the time defined by the specific absolute time and the specific LTE frame number.

The above described features and embodiments in the mentioned aspects may each be combined with any of the other features and embodiments with other ones of the mentioned aspects. These and other embodiments will be apparent from and elucidated with reference to the embodiments described hereinafter.

### BRIEF DESCRIPTION OF THE FIGURES

The compact ultrasonic flowmeter according to the invention will now be described in more detail with regard to the accompanying figures. The figures show one way of implementing the present invention and is not to be construed as being limiting to other possible embodiments falling within the scope of the attached claim set.
FIG. 1 shows a block diagram of a system embodiment,
FIG. 2 shows a block diagram of selected parts of a sensor device embodiment, and
FIG. 3 shows steps of a method embodiment.

### DETAILED DESCRIPTION

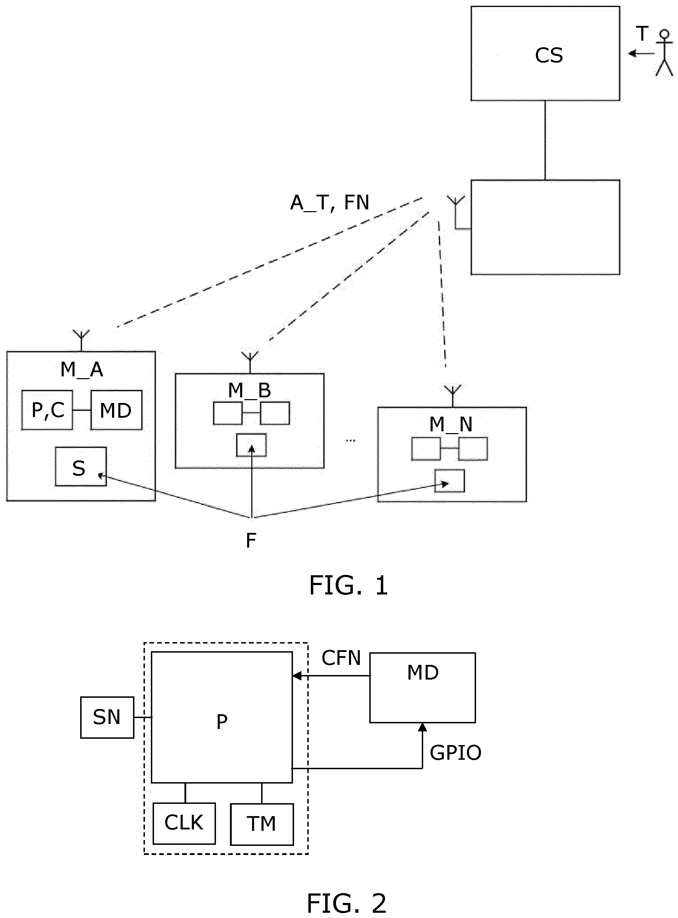

FIG. 1 shows a block diagram of a system embodiment with a plurality of sensor devices in the form of consumption meters M_A, M_B, M_N each having a processor system P with an internal clock, a wireless LTE modem connected to the processor system P, and a sensor system S with one or more sensors configured to measure a physical parameter in connection with a predetermined functionality F.

A back-end system with a control system CS can transmit, via an LTE network wireless signals to the individual consumption meters M_A, M_B, M_N. A user can select a future time T, an activation time, where it is preferred that the consumption meters M_A, M_B, M_N perform time synchronized measurements. In response, the control system CS transmits a wireless signal via the LTE network to the individual consumption meters M_A, M_B, M_N, wherein this wireless signal includes data indicative of an activation time in the form of an absolute time A_T as well as a specific LTE frame number FN. Optionally, the activation time may include only an absolute time A_T or only a specific LTE frame number FN.

Optionally, the wireless signal transmitted to the consumption meters M_A, M_B, M_N may comprise data indicative of the action to the performed, e.g. a measurement or which type of measurement to be performed.

In response to the received activation time A_T, FN, the consumption meters M_A, M_B, M_N perform a synchronization action involving reading a current frame number from the LTE modem MD. This allows the consumption meters M_A, M_B, M_N to synchronize time to the LTE network timing, and along with their internal clocks C, the consumption meters M_A, M_B, M_N can be prepared to perform the predetermined action precisely at the activation time A_T, FN.

In case the activation time A_T, FN is transmitted to the consumption meters M_A, M_B, M_N one or more days ahead, the consumption meters M_A, M_B, M_N have time to stay in a sleep mode of operation until a few minutes, or even few seconds, before the activation time, thereby saving electric energy. Especially, it may be preferred that the time synchronization involving reading the current LTE frame number is performed a short time before the specified activation time, e.g. if an internal timer is involved, so as to reduce the effect of an imprecise timer and to save battery power.

The time synchronization in the individual consumption meters M_A, M_B, M_N may be performed in various ways, but involving the time synchronized LTE frame numbers which can be read by the LTE modem MD. Especially, the processor system P may start a timer at the time when the current LTE frame number is read from the LTE modem MD.

Utilizing the LTE frame numbering as time synchronization, it is possible to precisely time activation of a measurement in the consumption meters M_A, M_B, M_N. This may be interesting for metering purposes, however it may be even more interesting for other measurements other than metering. For example, various events in the distribution network can be detected, if the consumption meters M_A, M_B, M_N distributed in an area of the distribution network can be operated to perform measurements simultaneously. For example, this may be used in acoustic leak detection in a fluid distribution network, such a water distribution network, to located a leak in the piping by means of simultaneous noise measurement along with known position of the consumption meters.

A special sensor device embodiment may be a dedicated acoustic leak detector which only has one or more sensors dedicated to measurement of acoustic signals for leak detection purposes, i.e. detection of noise or vibrations in the frequency range 100-2,000 Hz. Such dedicated acoustic leak detection devices can be distributed in a fluid distribution network at strategic locations to improve fast location of a leak.

The time synchronization made possible utilizing the LTE frame numbering may allow a number of measurement applications of a group of consumption meters M_A, M_B, M_N which have not been possible with the rather poor time precision offered by a typical internal clock C. E.g. measurement of electric phase in case of an electric meter.

It is to be understood that time synchronized, e.g. simultaneous, actions to be performed by the consumption meters M_A, M_B, M_N can be obtained in various ways of transmitting an activation time to the meters. For example, this can include transmitting a relative time, such as a day and time, and wherein the consumption meters M_A, M_B, M_N are programmed to perform the action at a specific time relative to the received relative time.

Further, the consumption meters M_A, M_B, M_N can receive an activation time in the form of an absolute time, and the consumption meters M_A, M_B, M_N are then programmed to initiate the action at a specific LTE frame number.

To sum up, there are many ways of implementing time synchronous, e.g. simultaneous, actions based on each individual consumption meter M_A, M_B, M_N performing a time synchronization to an current LTE frame number by means of their individual LTE modems MD.

FIG. 2 shows a block diagram of selected parts of a sensor device embodiment. In this embodiment, the processor system, indicated by the dashed box, comprises a processor P, at least one sensor SN, an internal clock CLK, and an internal timerTM.

The processor P is connected via an interface to an LTE modem MD. One way of implementing LTE frame number synchronization is that the processor P is programmed to signal on an electric pin GPIO of the LTE modem MD, and to receive data indicative of a current LTE frame number CFN in response. This may require that the interface of the LTE modem MD is prepared for this. Along with the signaling on the electric pin GPIO, the processor P starts the timer TM, and thus with the status of the timer TM along with the current LTE frame number CFN when the time TM was started, it is possible to provide a precise timing synchronized to the LTE frame number which is only influenced by the imprecision of the timer TM. For short time periods, this can be ignored, and thus this time synchronization allows high precision timing down to the length of one LTE frame or LTE sub frame, if preferred. Thus, a time synchronization of individual sensor devices within 1-10 ms is possible, or even better than 1 ms, or even better than 10 µs.

Especially, the processor P may be configured to calculate at which state of the timer TM to initiate the predetermined action, such a performing a measurement with the sensor SN, based on the activation time received, and based on the current LTE frame number CFN.

If for example the sensor device receives an activation time in the form of a future absolute time and a specific LTE frame number, the processor P can use its internal clock CLK to calculate a time to switch to normal mode of operation from a sleep mode of operation, i.e. a time to "wake up" well ahead of the activation time taking into account the possible imprecise clock CLK. When in normal mode of operation, the above described time synchronization can be performed using the timer TM, and based on a calculated state of the timer TM to perform the action, the action can be initiated.

It may further be preferred to transmit a message via the LTE network including data indicative of a current LTE frame number CFN read from the LTE modem MD along with the absolute time read from the clock CLK at the same time. The sensor device may then in response receive an adjustment time for adjusting the clock CLK to a more precise absolute time.

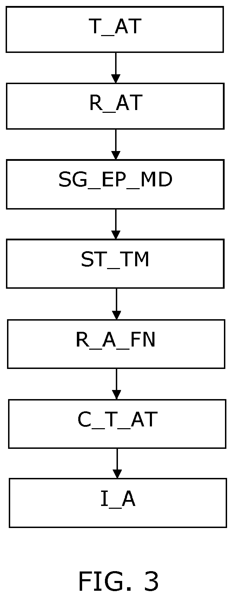

FIG. 3 shows steps of a method embodiment, namely a method for time synchronizing a plurality of sensor devices, such as a consumption meters. The method comprising transmitting T_AT a wireless signal on an LTE network comprising data indicative of an activation time, comprising data indicative of an absolute time and preferably also a specific LTE frame number. Further, receiving R_AT the wireless signal on the LTE network by a plurality of sensor devices, e.g. consumption meter distributed at the location of individual consumers in a utility network.

Further, performing in the plurality of sensor devices a synchronizing of timing to a current LTE frame number in cooperation with the LTE modem in the respective sensor devices. This is preferably done by signaling SG_EP_MD an electric pin on the LTE modem, simultaneously starting a timer ST_TM and reading from the LTE modem a current LTE frame number R_A_FN corresponding to the current LTE frame number. Preferably, also reading a from the LTE modem indicating a time (in microseconds) lapsed in a current LTE sub frame.

Finally, initiating I_A, by each of the sensor devices, a predetermined action, such as performing a measurement involving reading an output from a sensor system, synchronized with the activation time. Especially, this may involve the preceding step of calculating the state of the timer C_T_AT corresponding to the activation time, based on the received current LTE frame number, so as to synchronize precisely to the activation time with LTE frame timing precision for initiating the performance of the predetermined action simultaneously by the plurality of sensor devices.

Further, the method may involve transmitting data indicative of one or more measured values by the LTE network, by each of the sensor devices, or by other means.

Further, the method may comprising transmitting on the LTE network, by at least one of the sensor devices, a wireless signal comprising data indicative of a current LTE frame number read from the LTE mode in the at least one sensor device along with a corresponding absolute time read from the clock of the at least one sensor device. Thereby, the back end system can determine a relation between absolute time and LTE frame number in the sensor devices. This can be used to generate an activation time including both absolute time and a specific LTE frame number, and sending this activation time in wireless signal on the LTE network to the plurality of sensor devices.

To sum up, the invention a sensor device, such as a consumption meter, with an LTE modem, a processor system connected with the LTE modem, and a sensor system comprising at least one sensor configured to sense a physical parameter and to generate an output accordingly to the processor system. The sensor device is configured to receive an activation time via the LTE network, wherein the activation time includes an absolute time and/or an indication of a specific LTE frame number. The processor system is configured to synchronize timing to a current LTE frame number in cooperation with the LTE modem. This may especially be done by the processor system signaling on an electric pin to the LTE modem which in response outputs a current LTE frame number, and along with the signaling on the electric pin, the processor system starts a timer. Thus, with the timer started at a known LTE frame number, the sensor device can calculate precisely to initiate a predetermined action time synchronized with the absolute time indicated in the received activation time along with a specific LTE frame number. The action may involve performing a measurement with a sensor in the sensor device time synchronized with the received activation time. This provides high precision time synchronization of a group of sensor devices, thus allowing performing measurements simultaneously by the group of senor devices. This allows group measurements which are not possible with the time precision of internal clocks of a group of sensor devices, and this time synchronization can be important for some applications, such as acoustic leak detection in a utility network.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A sensor device (M_A, M_B, M_N) comprising
- an LTE modem (MD) configured to receive and transmit wireless signals on an LTE network,
- a processor system (P, CLK, TM) connected with an interface to the LTE modem (MD), wherein the processing system (P, CLK, TM) comprises a clock (C, CLK) configured to provide an absolute time output, and wherein the processor system (P, CLK, TM) further comprises a timer (TM), and
- a sensor system (S, SN) comprising at least one sensor (SN) configured to sense a physical parameter and to generate an output accordingly to the processor system (P, CLK, TM),
**characterized in that** the sensor device (M_A, M_B, M_N) is configured:
- to receive a wireless signal on the LTE network comprising data indicative of an activation time (A_T, FN) comprising at least data indicative of an absolute (A_T) time or a relative time,
- to time synchronize to a current LTE frame number (CFN) in cooperation with the LTE modem (MD), and
- to initiate a predetermined action involving the sensor system (S, SN), such as initiating a measurement or reading an output from the sensor system (S, SN), synchronized with the absolute time (A_T) or relative time, and synchronized with a specific LTE frame number (FN), wherein the specific LTE frame number (FN) is received in the data indicative of the activation time (A_T, FN) or stored in the sensor device.

2. The sensor device according to claim 1, wherein the data indicative of the activation time (A_T, FN) comprises data indicative of both of: 1) an absolute time (A_T) and 2) a specific LTE frame number (FN).

3. The sensor device according to claim 1 or 2, wherein the processor system (P, CLK, TM) is configured to signal on an electric pin (GPIO) of the LTE modem (MD), and to receive data indicative of a current LTE frame number (CFN) in response.

4. The sensor device according to claim 3, wherein the processor system (P, CLK, TM) is configured to start the timer (TM) in a synchronized manner, such as simultaneously, along with the signaling on the electric pin (GPIO) of the LTE modem (MD).

5. The sensor device according to claim 3 or 4, wherein the processor system is configured to calculate at which timer state to initiate said predetermined action based on the specific LTE frame number and the data indicative of the current LTE frame number received from the LTE modem.

6. The sensor device according to any of the preceding claims, wherein the wireless signal received on the LTE network comprises data indicative of both of: the specific LTE frame number, and a specific absolute time, such as a specific absolute future time, such as a specific absolute future time including data indicative of a future day and a time of the future day.

7. The sensor device according to any of the preceding claims, wherein the processor system is configured to utilize the clock to determine which day and approximate time on the day to initiate said predetermined action.

8. The sensor device according to any of the preceding claims, wherein the sensor device is configured to enter a sleep mode of operation and to enter a normal mode of operation in response to an absolute time output from the clock reaching a predetermined time, and wherein the processor system is configured to determine a time to enter the normal mode of operation prior to a time defined by the activation time.

9. The sensor device according to any of the preceding claims, wherein the processor system is configured to read a current LTE frame number from the LTE modem by signaling on an electric pin of (GPIO) of the LTE modem, and wherein the processor system is further configured to calculate a time and to wait until a current LTE frame number equals a predetermined LTE frame number.

10. The sensor device according to any of the preceding claims, wherein the predetermined action involves initiating at least one measurement of a physical parameter using the at least one sensor of the sensor system, and wherein the sensor device is configured to transmit data indicative of at least one measured value in a wireless signal on the LTE network.

11. The sensor device according to claim 10, wherein the at least one sensor is arranged to measure at least one of: a fluid flow rate, a temperature, a fluid pressure, a magnetic field strength, an electric impedance, an electric voltage or current, a turbidity measure, and an acoustic signal.

12. The sensor device according to any of the preceding claims, wherein the processor system is configured to receive data indicative of which type of action to initiate in a the wireless signal on the LTE network.

13. The sensor device according to any of the preceding claims, wherein the sensor device is a consumption meter, such as a water meter, a gas meter, a heat meter, a cooling meter, and an electricity meter, configured to measure a consumed amount of a utility and to transmit a wireless signal on the LTE network comprising data indicative of the measured consumed amount accordingly.

14. A system comprising
- a plurality of sensor devices (M_A, M_B, M_N) according to any of claims 1-13, and
- a back-end system (CS) configured to transmit a wireless signal on the LTE network comprising data indicative of an activation time (A_T, FN) to the plurality of sensor devices (M_A, M_B, M_N), such as an activation time comprising data indicative of an absolute time (A_T) and a specific LTE frame number (FN).

15. A method for time synchronizing a plurality of sensor devices, such as a consumption meters, the method comprising
- transmitting (T_AT) a wireless signals on an LTE network comprising data indicative of an activation time comprising data indicative of at least an absolute time or relative time, such as comprising data indicative of a specific LTE frame number and an absolute time,
- receiving (R_AT) the wireless signals on the LTE network by a plurality of sensor devices,
- synchronizing (SG_EP_MD, ST_TM, R A_FN) timing to a current LTE frame number in cooperation with an LTE modem, by each of the sensor devices, and
- initiating (I_A), by each of the sensor devices, a predetermined action, such as performing a measurement involving reading an output from a sensor system, synchronized with the absolute time or relative time, and synchronized with a specific LTE frame number, wherein the specific LTE frame number is received in the data indicative of the activation time or stored in the sensor device.

16. The method according to claim 15, comprising receiving data indicative of both of: 1) a current LTE frame number and 2) an absolute time associated with the current LTE frame number from at least one sensor device, so as to allow estimation of timing between LTE frame number and absolute time in a sensor device, and generating data indicative of an activation time based on the received data.
